# EUROPEAN PATENT APPLICATION

(11) **EP 4 478 271 A1**
(43) Date of publication of application: **18.12.2024**
(21) Application number: 23178660.9
(22) Date of filing: 12.06.2023
(51) Int. Cl.: G06Q 10/0639, H04L 41/0806

(54) **A METHOD FOR VALIDATING THE INSTALLATION OF A DEVICE IN AN ENVIRONMENT**

(71) Applicant: Siemens Aktiengesellschaft, 80333 München (DE)
(72) Inventor: Frank, Reinhard, 81369 München (DE); Zeiger, Florian, 85635 Höhenkirchen-Siegertsbrunn (DE)
(74) Representative: Siemens Patent Attorneys

(57) **Abstract**

The invention refers to a method for validating the installation of a device (DE) in an environment, particularly in an industrial environment, comprising the following steps:
a) receiving by a management module (OM) of a mobile entity (ME) an instruction data set (ID) including a validation task (VT) with respect to one or more installation specifications (ISP) at the installation site of the device (DE), the validation task (VT) being a check whether a respective installation specification (ISP) fulfils a respective requirement (RE) ;
b) positioning the mobile entity (ME) next to the device (DE) at its installation site by the aid of a navigation module (NM) of the mobile entity (ME), where the navigation module (NM) recognizes when the mobile entity (ME) is next to the device;
c) capturing the one or more installation specifications (ISP) by one or more sensors (SE) of the mobile entity (ME);
d) performing the validation task (VT) by a sensor data analysis module (SA) of the mobile entity (ME), where the sensor data analysis module (SA) determines as a validation result (VR) which of the one or more installation specifications (ISP) captured by the one or more sensors (SE) fulfils the respective requirement (RE);
e) notifying the management module (OM) by the sensor data analysis module (SA) about the validation result (VR).

## Description

The invention refers to a method and a system for validating the installation of a device in an environment, particularly in an industrial environment.

Industrial control systems usually require a large number of devices being replaced and/or deployed from time to time. Furthermore, there is often a need to monitor the installation of corresponding devices at their installation sites or to detect errors in the installation of the devices.

E.g., after onboarding a new device into a data network, physical properties of the device may have an influence with respect to the operation of the device. However, current onboarding procedures focus on security mechanisms and the input/output configuration of the device and do not include other mechanisms to automatically validate physical properties of the device during the onboarding process.

It is an object of the invention to provide an easy validation of the installation of a device in an environment.

This object is solved by the method according to claim 1. Preferred embodiments of the inventions are defined in the dependent claims.

The method for validating the installation of a device is a computer-implemented method with comprises the following steps a) to e).

In step a), a management module of a mobile entity receives an instruction data set including a validation task with respect to one or more installation specifications at the installation site of the device, the validation task being a check whether a respective installation specification fulfils a respective requirement, i.e. a requirement defined for the respective installation specification.

In step b), the mobile entity is positioned next to the device at its installation site by the aid of a navigation module of the mobile entity, where the navigation module recognizes when the mobile entity is next to the device. To do so, the navigation module uses a location of the device which is usually included in the instruction data set.

In step c), the one or more installation specifications are captured by one or more sensors of the mobile entity. In step d), the validation task is performed by a sensor data analysis module of the mobile entity, where the sensor data analysis module determines as a validation result which of the one or more installation specifications captured by the one or more sensors fulfils the respective requirement. In step e), the management module is notified by the sensor data analysis module about the validation result.

The invention is characterized by a mobile entity which enables an on-demand validation of the installation of a device. To do so, the mobile entity is positioned next to the device and captures corresponding installation specifications by the use of one or more sensors being part of the mobile entity.

Different types of sensors may be used for capturing the one or more installation specifications. Particularly, the one or more sensors may detect whether the device is located at the correct position at the installation site and/or whether the device is connected correctly to data ports and/or power plugs at the installation site.

In preferred variant of the invention, the management module of the mobile entity receives in step a) the instruction data set from a supervising unit and transmits after step e) the validation result to the supervising unit which further processes the validation result. E.g., a process for integrating the device into a data infrastructure may be stopped by the supervising unit in case that at least one installation specification captured by the one or more sensors does not fulfil the respective requirements.

In another preferred embodiment of the invention, the instruction data set received by the management module of the mobile entity in step a) includes an onboarding instruction data set for onboarding the device into a data network within the environment. Preferably, the onboarding of the device will only start in case that the validation result is such that each of the one or more installations specifications fulfils the respective requirement.

In a preferred variant of the above embodiment, an onboarding orchestrator controlling the onboarding of the device is used as a supervising unit. In other words, the onboarding orchestrator will be notified about the validation result and will process this information accordingly. Preferably, the onboarding orchestrator will not start the onboarding of the device in case that at least one installation specification does not fulfil the respective requirement.

In another variant of the invention, the instruction data set received by the management module of the mobile entity in step a) includes one or more instructions for monitoring the installation of the device and/or detecting errors in the installation of the device. This embodiment enables an on-demand monitoring and error detection based on one or more sensors included in a mobile entity positioned at the installation site of the device.

In a preferred variant of the above embodiment, a control unit is used as a supervising unit, where the control unit is configured to determine a malfunction within the installation of the device in case that the validation result is such that at least one installation specification does not fulfil the respective requirement.

Preferably, the one or more installation specifications describe one or more features of the device and/or one or more features of the surrounding of the device. Preferably, features of both the device and its surrounding are included in the one or more installation specifications.

In another preferred embodiment of the invention, the one or more sensors comprise at least one camera for capturing one or more images at the installation site of the device. In other words, the one or more images at least partly contain at least one installation specification. Furthermore, the one or more sensors may contain at least one sensor for detecting one or more power and/or communication connections of the device to other equipment at the installation site. Such a sensor may be a camera or another type of sensor as well.

In another preferred embodiment of the invention, the one or more installation specifications captured by the one or more sensors and/or the validation result are stored in one or more databases. Those databases may comprise one or more local databases within the mobile entity and/or one or more databases located remote from the mobile entity.

In another preferred variant of the invention, the mobile entity is an autonomously moving entity which moves autonomously in step b) to the device by the aid of the navigation module. In other words, the mobile entity is guided by the navigation module to the location of the device. This variant of the invention provides a high degree of automatization. Depending on the circumstances, the autonomously moving entity may be a drone or a ground vehicle.

Furthermore, in another embodiment of the invention, the mobile entity is a portable entity and the navigation module outputs navigation commands, e.g. via a user interface, for navigating in step b) a human user or robot carrying the mobile entity to the device. In this embodiment, the function concerning the movement of the mobile entity is not part of the mobile entity itself.

Besides the above method, the invention refers to a system for validating the installation of a device in an environment, particularly in an industrial environment, where the system is configured to perform the method according to the invention or according to one or more preferred embodiments thereof. I.e., the system comprises the mobile entity together with its modules as defined above.

In the following, embodiments of the invention will be described with respect to the accompanying drawings wherein
- Fig. 1: is a schematic illustration showing the components used in an embodiment according to the invention; and
- Fig. 2: is a diagram showing the steps performed by the embodiment of Fig. 1.

In the following, the method of the invention will be described with respect to a process for onboarding a device into a data network where the onboarding will only take place in case that the validation of the installation of the device at its installation site comes to the result that certain requirements with respect to the installation are fulfilled.

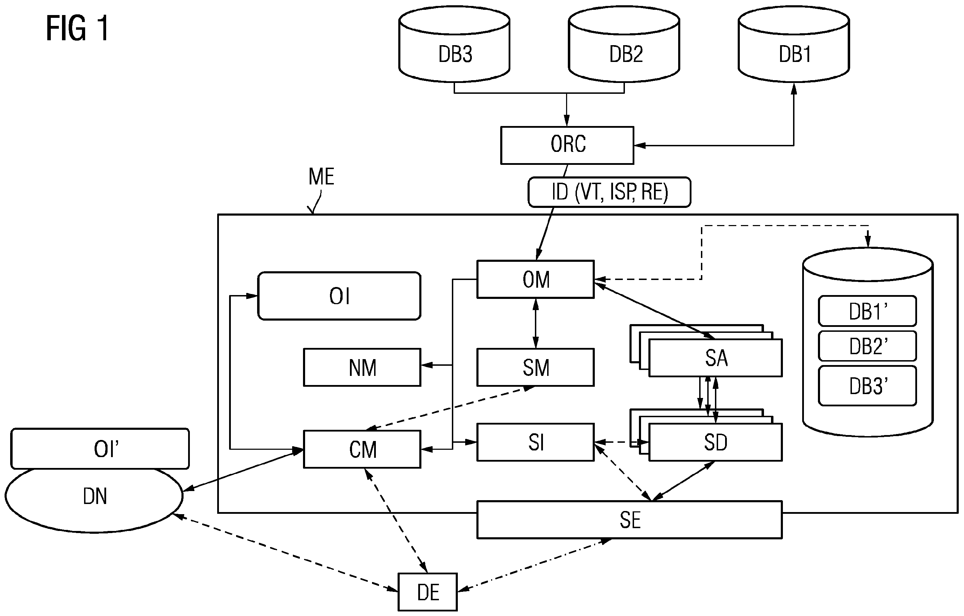

Fig. 1 shows the components used in an embodiment of the invention. Interactions between those components are indicated by corresponding double arrows. The device DE which installation is to be validated is a field device which shall be onboarded into a data network DN within an industrial environment, e.g. within a factory or a plant. For performing the onboarding, a mobile entity ME is used which contains the computing and communication infrastructure to carry out the onboarding process for the device DE. In the embodiment described herein, the mobile entity ME is an autonomously moving vehicle, e.g. a drone (also named as UAV = Unmanned Aerial Vehicle) or an automatic guided vehicle (AGV).

The mobile entity ME comprises a navigation module NM which is responsible to navigate the mobile entity ME to the position where the device DE is located within the industrial environment. The mobile entity ME communicates with a so-called onboarding orchestrator ORC which is a remote entity in the backend from which the mobile entity ME receives an onboarding instruction data set ID. This data set comprises the necessary information for performing the onboarding and also includes a validation task VT defining several installation specifications ISP as well as a corresponding requirement RE for each installation specification. The validation task is a check whether a respective installation specification ISP fulfils the corresponding requirement RE. Only in case that the requirements specified in the validation task are fulfilled, the onboarding will be performed.

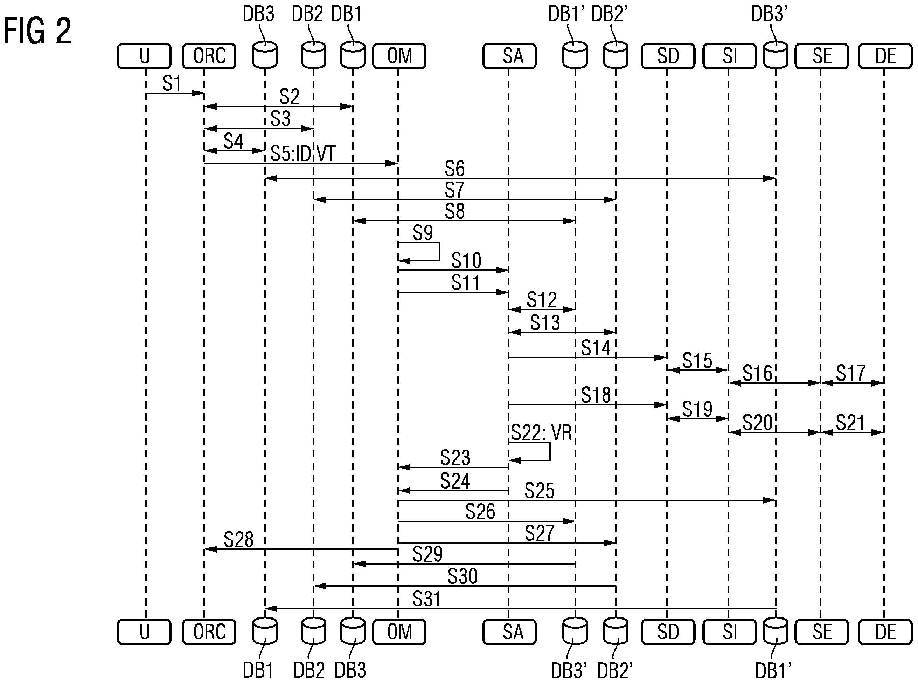

The installation specifications ISP refer to parameters which are relevant with respect to a correct installation of the device at its installation site. As will be described with respect to Fig. 2, two installation specifications will be checked in the embodiment described herein. These installation specifications refer to correct wire connections on the backside of the device and to a correct placement of a power plug of the device in a power socket located at the installation site. Another installation specification may e.g. refer to a security fence which needs to be installed around the device, e.g. in case that the device is a laser scanner. The requirement for this installation specification is that a security fence is located around the device.

The information concerning the validation task VT is stored in the databases DB1, DB2 and DB3 connected to the orchestrator ORC and located remote from the mobile entity ME. Corresponding databases DB1', DB2' and DB3' are also located within the mobile entity ME. The databases DB1 and DB1' contain device specific descriptions and requirements concerning the physical installation of the device (e.g. wire connections, mounting regulations). The databases DB2 and DB2' contain descriptions and requirements concerning the surrounding where the device is installed (e.g. available power sockets, wired networks, water connections and so on). The databases DB3 and DB3' contain the documentation of the device installation and the onboarding being performed. Particularly, the validation result is stored within those databases.

The onboarding instruction data set ID is processed by an onboarding management module OM within the mobile entity ME. This information is compiled to an onboarding schedule, linking all required steps of the onboarding procedure. The steps of the schedule are then executed. The validation task VT performed prior to the onboarding checks the installation specifications based on data captured by sensors SE integrated within the mobile entity ME. The sensors may comprise any types of sensors being capable to capture the corresponding installation specifications. E.g., the sensors may comprise one or more cameras for taking images of the device and its surrounding.

The sensors SE interact with a sensor interface SI and a sensor data driver module SD. The sensor interface SI provides an interface to the corresponding sensors SE. This interface manages all physical connections (e.g. power supply) as well as input/output related connections (e.g. control data exchange between the sensor data driver module and the sensor hardware, measurement data retrieval from the sensor hardware and forwarding the measurement data to the sensor data driver module). The sensor interface is also an interface to parameterize and calibrate sensors.

The sensor data driver module SD manages and handles the data exchange between the sensor interface SI and a sensor data analysis module SA. The sensor data driver module SD has one sensor data driver for each sensor. The sensor data drivers retrieve sensor data in the required raw formats. The retrieved data are forwarded to the sensor data analysis module SA with the required properties (e.g. image resolution of a video frame, sampling rate of a temperature sensor). The sensor data analysis module SA comprises a data analysis unit for each installation specification ISP captured by the sensors SE and evaluates whether the requirement RE for the respective installation specification ISP is fulfilled. In case that several mobile entities are used, the sensor data analysis module may also receive sensor data from other mobile entities and use those data to check the corresponding requirement within the validation task VT.

The mobile entity ME further comprises a security module SM which is also named as AAA module (Authentication Authorization Accounting). This module contains information for identifying the device to be onboarded so that the device can be validated.

The mobile entity ME further comprises a communication module CM which is used for the communication of the device DE to be onboarded with the mobile entity ME. In the embodiment described herein, the communication between the communication module CM and the device DE is based on a wireless technology, e.g. NFC, WLAN, Bluetooth and so on.

In case that the requirements set forth in the validation task VT are fulfilled for the data captured by the sensors SE, the onboarding of the device DE is performed by an onboarding infrastructure OI which is integrated within the mobile entity ME. The onboarding infrastructure OI contains all required information and artefacts for running a defined onboarding process including device checks and validation. The onboarding infrastructure OI comprises components well-known from the prior art in order to perform the onboarding, particularly a registrar, a PKI infrastructure and the like.

The onboarding infrastructure performs the onboarding based on a method according to the prior art, e.g. based on BRSKI zero-touch (BRSKI = Bootstrapping Remote Secure Key Infrastructure). For the onboarding process, the onboarding infrastructure OI communicates via the communication module CM with the device DE to be onboarded.

In an alternative embodiment, the onboarding infrastructure is not integrated in the mobile entity ME but located in the backend. Such a remote onboarding infrastructure is designated as OI' in Fig. 1. For onboarding, the remote onboarding infrastructure OI' communicates via the data network DN and the communication module CM with the device DE. To do so, the communication module has a wireless interface to the data network DN.

The onboarding management module OM as mentioned above is the main component for controlling the onboarding process within the mobile entity ME. It interacts with the security module SM, the navigation module NM, the sensor data analysis module SA, the sensor interface SI, the communication module CM as well as with modules hosted in the backend system (e.g. the onboarding orchestrator ORC). The onboarding management module guarantees that the "onboarding description" is compiled into real virtual function instances and infrastructure correctly.

Fig. 2 shows the steps being performed by the system as described with respect to Fig. 1. The onboarding orchestrator ORC processes an onboarding job which it has received beforehand in step S1, e.g. based on an input of a user U. The onboarding job specifies the onboarding of the device DE into the data network DN. The device DE may be any field device. E.g., the device DE may be a communication gateway device where the onboarding requires a validation of correct wire connections to a defined power socket at the installation site of the device, where the power socket is supplied with an emergency power supply for continuous operations during power failure times. As this gateway device is part of an important infrastructure, the onboarding procedure needs to validate these physical requirements and the validation result must be documented and compared to the defined engineered setup.

In step S2, the onboarding orchestrator ORC searches and retrieves descriptions and requirements for the device DE from the database DB1. In step S3, the onboarding orchestrator ORC retrieves descriptions and requirements for the surrounding of the device from the database DB2. In step S4, a documentation entry is started by the onboarding orchestrator ORC within the database DB3. The information received in steps S2 and steps S3 contain the relevant installation specifications ISP and the corresponding requirements RE for those specifications and thus form the basis of the validation task VT.

In step S5, the onboarding instruction data set ID comprising the corresponding validation task VT is sent to the onboarding management module OM. Thereafter, the data relevant for onboarding as synchronized between the databases DB3 and DB3' (step S6), the databases DB2 and DB2' (step S7) and the databases DB1 and DB1' (step S8).

Thereafter, in step S9, the mobile entity ME moves autonomously to the location of the device DE to be onboarded. After the mobile entity ME has arrived at this location, a request to check the setup of the correct wire connections on the backside of the device to other equipment is sent from the onboarding management module OM to the sensor data analysis module SA in step S10. Furthermore, in step S11, a request to check the correct placement of the power plug of the device in a power socket is sent from the onboarding management module OM to the sensor data analysis module SA.

Thereafter, the relevant descriptions and data are retrieved from the database DB31 (step S12) and from the database DB2' (step S13). In step S14, a request to take an image from the backside of the device DE with a given resolution by a corresponding sensor SE in the form of a camera is sent from the sensor data analysis module SA to the sensor data driver module SD. Thereafter, the image of the backside of the device DE is taken by the camera and the corresponding raw data of the image are retrieved (steps S15, S16 and S17).

In step S18, a request to take an image from the power socket to which a plug of the device is expected to be connected is sent from the sensor data analysis module SA to the sensor data driver module SD. Thereafter, this image is taken by a corresponding camera and the raw data of this image are retrieved in steps S19, S20 and S21. In step S22, the sensor data analysis module SA starts the validation based on the images. It is validated whether the correct wire connections are setup on the backside on the device and whether the power plug of the device is correctly placed in the power socket. This information can be retrieved from the images taken. Hence, step S22 provides the validation result VR of the validation task VT. This result specifies a first result indicating whether the correct wire connections are setup on the backside of the device and a second result indicating whether the power plug of the device is correctly placed in the power socket. Those two results are sent in steps S23 and S24 to the onboarding management module OM.

In steps S25, S26 and S27, updates for the databases DB3', DB1' and DB2' are sent from the onboarding management module OM to the corresponding databases, if required. Particularly, the documentation entry is updated in the database DB3' in step S25, the device description database DB1' is updated in step S26 and the surrounding description database DB2' is updated in step S27. The databases S26 and S27 are updated in case that there are discrepancies between the descriptions as detected by the sensors SE and the descriptions currently stored in the databases.

In step S28, the validation result VR is notified to the onboarding orchestrator ORC. In a preferred variant, the onboarding orchestrator will stop the onboarding of the device DE in case that the validation result VR indicates that not all requirements checked in step S22 are fulfilled. In step S29, the database DB1 is synchronized with the database DB1'. In step S30, the database DB2 is synchronized with the database DB2'. Furthermore, in step S31, the database DB3 is synchronized with the database DB3'.

In the foregoing, the method of the invention has been described with respect to an onboarding process. However, the validation according to the invention may also be used for other processes, e.g. the validation may be part of a process for finding errors in the installation of a device or for monitoring the installation of a device, e.g. during commissioning or decommissioning.

The invention as described above has several advantages. Particularly, the onboarding mechanism is extended by a validation of the installation of the device to be onboarded. Hence, installation problems can be recognized well before the onboarding takes place. To do so, the installation site of the device is captured by sensors of a mobile entity and the captured installation is compared with corresponding requirements. Errors in the installation can thus be documented and an onboarding process can be stopped in case that requirements with respect to the installation are not fulfilled.

## Claims

1. A method for validating the installation of a device (DE) in an environment, particularly in an industrial environment, comprising the following steps:
a) receiving by a management module (OM) of a mobile entity (ME) an instruction data set (ID) including a validation task (VT) with respect to one or more installation specifications (ISP) at the installation site of the device (DE), the validation task (VT) being a check whether a respective installation specification (ISP) fulfils a respective requirement (RE) ;
b) positioning the mobile entity (ME) next to the device (DE) at its installation site by the aid of a navigation module (NM) of the mobile entity (ME), where the navigation module (NM) recognizes when the mobile entity (ME) is next to the device;
c) capturing the one or more installation specifications (ISP) by one or more sensors (SE) of the mobile entity (ME);
d) performing the validation task (VT) by a sensor data analysis module (SA) of the mobile entity (ME), where the sensor data analysis module (SA) determines as a validation result (VR) which of the one or more installation specifications (ISP) captured by the one or more sensors (SE) fulfils the respective requirement (RE);
e) notifying the management module (OM) by the sensor data analysis module (SA) about the validation result (VR).

2. The method according to claim 1, wherein the management module (OM) of the mobile entity (ME) receives in step a) the instruction data set (ID) from a supervising unit and transmits after step e) the validation result (VR) to the supervising unit which further processes the validation result (VR) .

3. The method according to claim 1 or 2, wherein the instruction data set (ID) received by the management module (OM) of the mobile entity (ME) in step a) includes an onboarding instruction data set for onboarding the device (DE) into a data network (DN) within the environment, where preferably the onboarding of the device (DE) will only start in case that the validation result (VR) is such that each of the one or more installation specifications (ISP) fulfils the respective requirement (RE).

4. The method according to claim 2 and 3, wherein the supervising unit is an onboarding orchestrator (ORC) controlling the onboarding of the device (DE).

5. The method according to one of the preceding claims, wherein instruction data set (ID) received by the management module (OM) of the mobile entity (ME) in step a) includes one or more instructions for monitoring the installation of the device (DE) and/or detecting errors in the installation of the device (DE).

6. The method according to claim 5 in combination with claim 2, wherein the supervising unit is a control unit for determining a malfunction within the installation of the device (DE) in case that the validation result (VR) is such that at least one installation specification (ISP) does not fulfil the respective requirement (RE).

7. The method according to one of the preceding claims, wherein the one or more installation specifications (ISP) describe one or more features of the device (DE) and/or one or more features of the surrounding of the device (DE).

8. The method according to claim 7, wherein the one or more sensors (SE) comprise at least one camera for capturing one or more images at the installation site of the device (DE) and/or at least one sensor for detecting one or more power and/or communication connections of the device (DE) to other equipment at the installation site.

9. The method according to one of the preceding claims, wherein the one or more installation specifications (ISP) captured by the one or more sensors (SE) and/or the validation result (VR) are stored in one or more databases (DB1, DB2, DB3, DB1', DB2', DB3').

10. The method according to claim 9, wherein the one or more databases (DB1, DB2, DB3, DB1', DB2', DB3') comprise one or more local databases (DB1', DB2', DB3') within the mobile entity (ME) and/or one or more remote databases (DB1, DB2, DB3) located remote from the mobile entity (ME).

11. The method according to one of the preceding claims, wherein the mobile entity (ME) is an autonomously moving entity which moves autonomously in step b) to the device (DE) by the aid of the navigation module (NM).

12. The method according to claim 11, wherein the autonomously moving entity is a drone or a ground vehicle.

13. The method according to one of claims 1 to 10, wherein the mobile entity (ME) is a portable entity and the navigation module (NM) outputs navigation commands for navigating in step b) a human user or robot carrying the mobile entity (ME) to the device (DE).

14. A system for validating the installation of a device (DE) in an environment, particularly in an industrial environment, wherein the system is configured to perform the following steps:
a) receiving by a management module (OM) of a mobile entity (ME) an instruction data set (ID) including a validation task (VT) with respect to one or more installation specifications (ISP) at the installation site of the device (DE), the validation task (VT) being a check whether a respective installation specification (ISP) fulfils a respective requirement (RE) ;
b) positioning the mobile entity (ME) next to the device (DE) at its installation site by the aid of a navigation module (NM) of the mobile entity (ME), where the navigation module (NM) recognizes when the mobile entity (ME) is next to the device;
c) capturing the one or more installation specifications (ISP) by one or more sensors (SE) of the mobile entity (ME);
d) performing the validation task (VT) by a sensor data analysis module (SA) of the mobile entity (ME), where the sensor data analysis module (SA) determines as a validation result (VR) which of the one or more installation specifications (ISP) captured by the one or more sensors (SE) fulfils the respective requirement (RE);
e) notifying the management module (OM) by the sensor data analysis module (SA) about the validation result (VR).

15. The system according to claim 14, wherein the system is configured to perform a method according to one of claims 2 to 13.
